# EUROPÄISCHE PATENTANMELDUNG

(11) **EP 2 377 667 A2**
(43) Veröffentlichungstag der Anmeldung: **19.10.2011**
(21) Anmeldenummer: 11156018.1
(22) Anmeldetag: 25.02.2011
(51) Int. Cl.: B29C 49/42, B29C 49/06

(54) **Vorrichtung und Verfahren zum Handhaben eines Behälterproduktes**

(30) Priorität: 19.04.2010 DE 102010027907
(71) Anmelder: Krones AG, 93073 Neutraubling (DE)
(72) Erfinder: Senn, Konrad, 93059 Regensburg (DE); Holzer, Christian, 84069 Schierling (DE)
(74) Vertreter: Grünecker, Kinkeldey, Stockmair & Schwanhäusser

(57) **Zusammenfassung**

Es wird eine Vorrichtung und ein Verfahren zum Handhaben eines Behälterproduktes, insbesondere eines Behälters oder eines Preforms (2) zur Herstellung eines Behälters beschrieben, wobei das Produkt (2) mit einer Ausrichtmarkierung (14,16) versehen und mit einer Ausrichteinrichtung in eine vorbestimmte Drehwinkelposition bezüglich einer Halterung (6) verdrehbar ist. Um diese auf konstruktiv einfache und sichere Weise zu tun, wird vorgeschlagen, dass die Ausrichteinrichtung (8) an einer Übergabestelle (Ü) zwischen einer Halterung (5) einer ersten Transporteinrichtung (3) und einer Halterung (6) einer zweiten Transporteinrichtung (4) angeordnet ist, in der sich die Halterungen (5,6) einander begleitend relativ zueinander bewegen, und dass die Verdrehbewegung des Produktes (2) die vorbestimmte Drehwinkelposition aus der Relativbewegung der Halterungen (5,6) abgeleitet ist.

## Beschreibung

Die Erfindung bezieht sich auf eine Vorrichtung zum Handhaben eines Behälterproduktes gemäß dem Oberbegriff von Anspruch 1 und ein Verfahren dafür gemäß dem Oberbegriff von Anspruch 13.

Bei der Herstellung von Kunststoffbehältern wird üblicherweise zunächst ein Preform hergestellt, der die für den fertigen Behälter erforderliche Materialmenge und bevorzugt auch bereits den fertigen Hals mit Gewinde und gegebenenfalls einen sich unter dem Gewinde befindlichen Kragen oder einen Bund enthält, jedoch im übrigen Bereich kleiner und dickwandiger als der fertige Behälter ist. Dieser Preform wird bevorzugt durch Spritzgießen hergestellt. Der Preform wird anschließend in eine Blasform eingesetzt und durch Druckgas sowie gegebenenfalls mechanische Reckung zum fertigen Behälter verformt. Zwischen dem Spritzgießen des Preforms und dem Blasformen wird der Preform bevorzugt nochmals erwärmt. Es kann aus den verschiedensten Gründen vorteilhaft oder notwendig sein, den Preform mit einer bestimmten Ausrichtung in die Blasform einzusetzen. Dies kann beispielsweise bei Behältern notwendig werden, die aus einem rotationssymmetrischen Preform zu einem nicht-rotationssymmetrischen Behälter geformt werden, beispielsweise zu Behältern mit einem ovalen Querschnitt. Hier ist es vorteilhaft, die stärker zu verstreckenden Bereiche des Preforms, d.h. die im Oval außenliegenden Bereiche, stärker zu erwärmen als die übrigen Bereiche, so dass im Wesentlichen überall die gleiche Wandstärke erreicht wird. In diesem Falle ist es notwendig, den Preform mit einer exakt auf die selektiv unterschiedliche Erwärmung abgestimmten Ausrichtung in die Blasform einzusetzen. Aus den unterschiedlichsten Gründen kommt es jedoch immer wieder vor, dass sich die Ausrichtung des Preforms vor bzw. beim Einsetzen in die Blasform verändert.

Um dies zu verhindern, sind eine Vielzahl von Möglichkeiten vorgeschlagen worden. So zeigt beispielsweise die EP 1 279 477 eine in die Blasformstation integrierte Wärmestation, der ein Positionsregulator nachgeordnet ist, der die Positionen der Preforms vor dem eigentlichen Blasformprozess nochmals korrigiert. Der Positionsregulator enthält einen Sensor, der eine Ausrichtmarkierung am Preform erkennt und feststellt, ob sich diese in der vorbestimmten Drehwinkelposition befindet. lst dies nicht der Fall, so wird die Halterung des Preforms, die hier aus einem Dorn besteht, auf den der Preform mit der Öffnung nach unten aufgesteckt wird, durch einen Motor über eine Zahnstange/Zahnkranz-Übertragung angetrieben. Diese Art der Ausrichtkorrektur ist relativ aufwändig und erfordert eine elektronische Steuerung.

Eine weitere Möglichkeit, die Drehwinkelausrichtung des Preforms zu vergleichmäßigen bzw. zu korrigieren, ist aus der EP 1 261 471 bekannt. Bei dieser Konstruktion enthält die Blasform ein Greiforgan, das innerhalb der Blasform und vor dem Blasprozess in den Halsbereich des Preforms eingesetzt wird. Über eine Sensorvorrichtung, beispielsweise eine optische Vorrichtung, wird eine Ausrichtmarkierung am Preform erfasst und deren Position festgestellt. Stimmt die Position nicht mit der vorbestimmten Drehwinkelposition des Preforms überein, wird das Greiforgan über einen Motor und eine Ritzel/Zahnrad-Übertragung verdreht. Auch hier ist der Aufwand relativ hoch.

Eine weitere Möglichkeit der Ausrichtkorrektur ist der DE 196 47 260 A1 zu entnehmen. Hier erfolgt die Drehwinkelausrichtung vor dem Erwärmen des Preforms und durch Drehung einer Halterung, auf die der Preform kopfüber aufgeschoben ist. Der Halsbereich des Behälters ist mit zwei sich diametral gegenüberliegenden Vorsprüngen versehen, die einen Anschlag für zwei sich parallel und gegenläufig bewegende Ausrichtfinger bilden. Die Ausrichtfinger bewegen sich beidseitig so über den Halsbereich, dass ihre Stirnflächen sich diametral gegenüberliegen. Dann wird der Träger über eine Zahnstangen/Zahnkranz-Übertragung gedreht, bis der nächstliegende Anschlag an der Stirnfläche des Ausrichtfingers anlegt. Auch dies ist relativ aufwändig und allenfalls für eine Grobausrichtung geeignet.

Der Erfindung liegt die Aufgabe zugrunde, eine Vorrichtung und ein Verfahren zum Handhaben eines Behälterproduktes bereitzustellen, mit dem ein konstruktiv einfaches und sicheres Ausrichten der Drehwinkellage des Produktes möglich ist.

Die Aufgabe wird durch die Vorrichtung nach Anspruch 1 und das Verfahren nach Anspruch 13 gelöst.

Durch die erfindungsgemäße Vorrichtung und das erfindungsgemäße Verfahren wird ein gesonderter Antrieb für das Produkt in seine vorbestimmte Drehwinkelposition und Sensoren für die Positionsüberwachung überflüssig. Es wird weiterhin keine Unterbrechung im Verfahrensablauf notwendig, die erforderlich ist, damit das Produkt an der Winkelkorrekturstelle gedreht werden kann.

Vorteilhafte Weiterbildungen der Erfindung sind den Unteransprüchen zu entnehmen.

Bevorzugt ist die Ausrichteinrichtung der zweiten Transporteinrichtung zugeordnet, da bei der Übergabe auf die zweite Transporteinrichtung keine Fehlerquelle für eine erneute Fehlausrichtung eröffnet wird.

Das in eine Arretierungsstellung verbringbare Positionierelement der Ausrichteinrichtung dient anschließend der Beibehaltung der einmal erreichten korrekten Drehwinkelausrichtung, ohne dass zusätzliche Vorkehrungen erforderlich sind.

Das Positionierelement ist zu diesem Zweck bevorzugt federbelastet.

Weist das Positionierelement außer seiner Arretierstellung auch eine Bereitschaftsstellung auf, so wird die Reaktionszeit verringert.

Das Positionierelement ist bevorzugt als federbelasteter Kipphebel ausgebildet, da dieser eine besonders kurze Reaktionszeit aufweist.

Die Reaktionszeit wird weiter verringert, wenn das Positionierelement einen Eingriffsvorsprung und die Ausrichtmarkierung eine Eingriffsvertiefung aufweist, da dadurch der Vorsprung sofort in die Vertiefung eingreifen kann, während bei einer umgekehrten Anordnung das Positionierelement zunächst angehoben werden müsste.

Die Relativbewegung zwischen den Halterungen der beiden Transporteinrichtungen, die zum Verdrehen des Produktes ausgenutzt werden kann, ist besonders einfach zu verwirklichen, wenn wenigstens eine der Transporteinrichtungen, bevorzugt jedoch beide, eine zumindest annähernd kreisförmige Förderbahn aufweist.

Die Ableitung des Drehantriebes für das Produkt aus der Relativbewegung der Halterungen wird weiter erleichtert, wenn sich die Förderbahnen der ersten und zweiten Transporteinrichtung im Übergabebereich überlappen, so dass ein direkter Abgriff der Relativbewegung möglich ist. Dabei ist es besonders zweckmäßig, dass sich nicht nur die Förderwege sondern auch die Halterungen der ersten und zweiten Transporteinrichtung im Übergabereich überlappen, so dass das Produkt durch die erste Halterung noch gehalten wird, während es sich bereits im Zugriffsbereich der zweiten Halterung und der der zweiten Halterung zugeordneten Ausrichteinrichtung befindet, und sich in der ersten Halterung um seine Längsachse drehen kann, bis es seine vorbestimmte Ausrichtposition bezüglich der zweiten Halterung erreicht hat.

Ein Ausführungsbeispiel der Erfindung wird nachfolgend anhand der Zeichnungen näher erläutert. Es zeigen:
- Fig. 1: eine herausvergrößerte, vereinfachte Teildarstellung eines Übergabebereiches zwischen einer ersten und einer zweiten Transporteinrichtung,

- Fig. 2 bis 4: schematische Darstellungen der Relativbewegung zwischen den beiden Transporteinrichtungen,
- Fig. 5: ein erstes Ausführungsbeispiel eines verwendbaren Preforms,
- Fig. 6: ein zweites Ausführungsbeispiel eines verwendbaren Preforms,
- Fig. 7: eine Draufsicht des Übergabebereiches gemäß Fig. 1 mit dem Positionierelement in Bereitschaftsstellung, und
- Fig. 8: eine Darstellung ähnlich Fig. 7 mit dem Positionierelement in Arretierstellung.

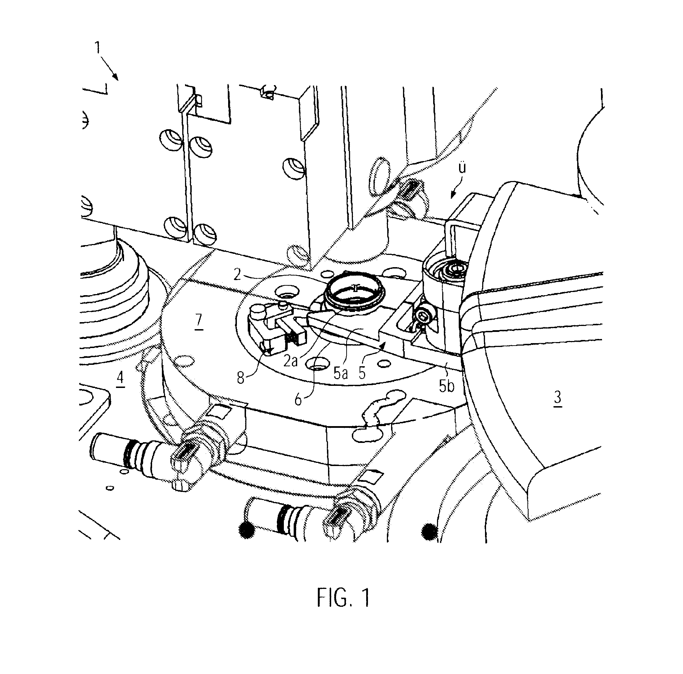

Fig. 1 zeigt einen Übergabebereich Ü in einer Vorrichtung 1 zum Handhaben eines Behälterproduktes, insbesondere eines Behälters oder eines Preforms. Dargestellt ist eine Vorrichtung zum Herstellen eines Behälters aus einem Preform 2. Die Vorrichtung 1 enthält eine erste Transporteinrichtung 3 und eine zweite Transporteinrichtung 4. Als "Transporteinrichtung" soll jede Vorrichtung verstanden werden, die in der Lage ist, einen Preform 2 bzw. einen aus dem Preform streckgeblasenen Behälter über einen Weg zu bewegen. Im dargestellten Ausführungsbeispiel ist die erste Transporteinrichtung 3 ein Transferstern, der Preforms von einer Vorbehandlung, beispielsweise direkt aus der Spritzvorrichtung oder aus einer Wärmebehandlungseinrichtung übernimmt und diese an die zweite Transporteinrichtung 4 übergibt, die im dargestellten Ausführungsbeispiel als Blasformmaschine ausgebildet ist. Die Erwärmung kann mit Infrarotstrahlung, aber auch mittels elektromagnetischer Strahlung wie z.B. Mikrowellenstrahlung erfolgen.

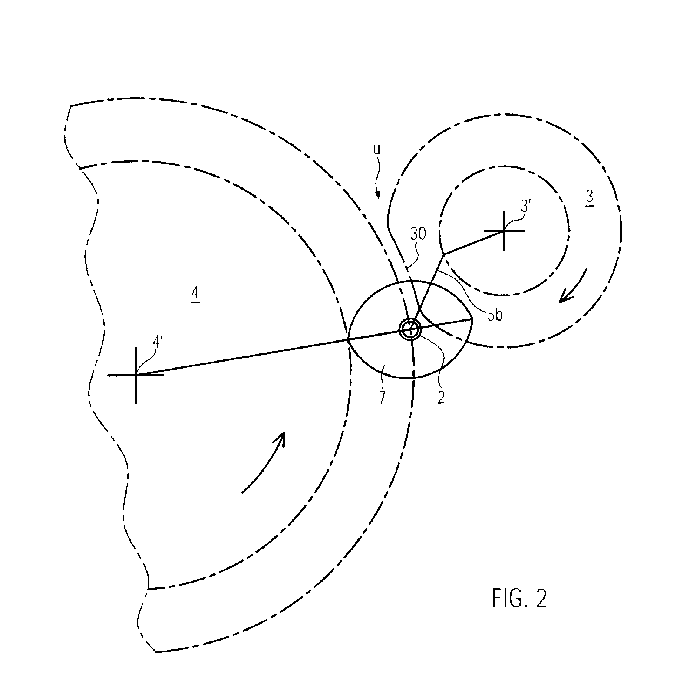

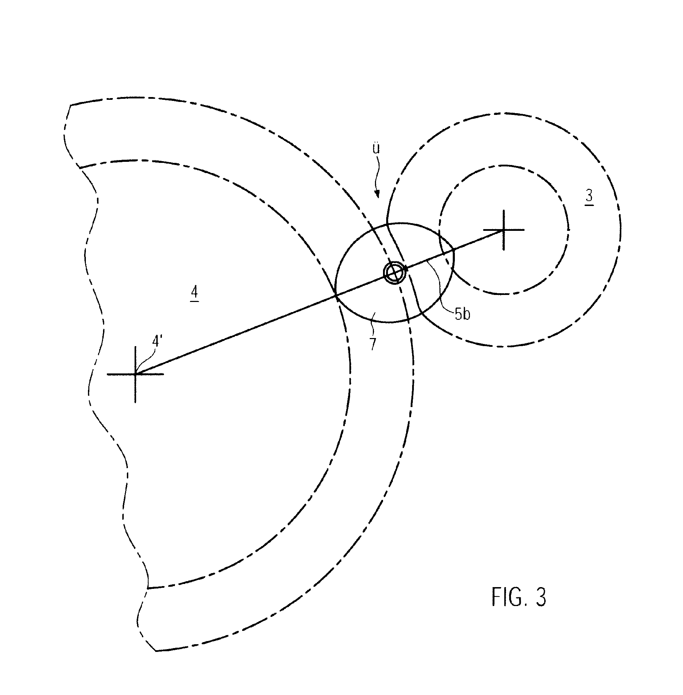

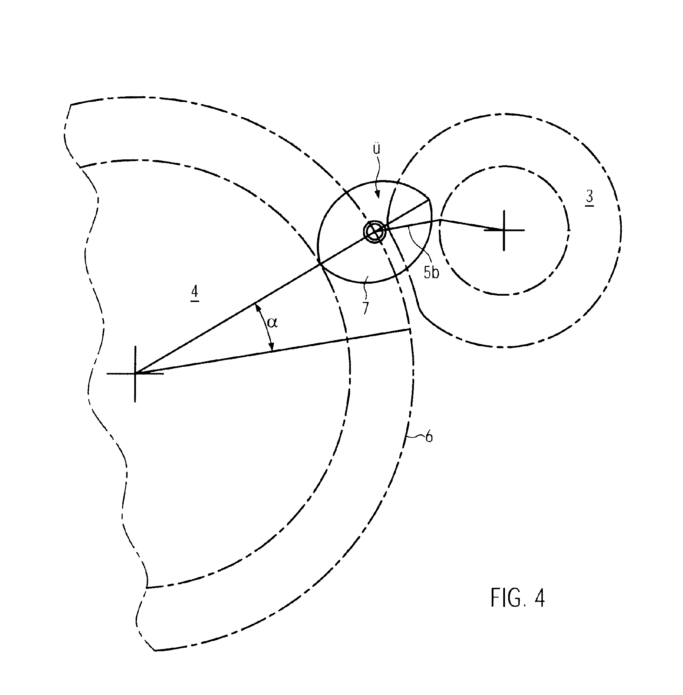

Beide Transporteinrichtungen 3, 4 weisen, wie den Fig. 2 bis 4 zu entnehmen ist, einen zumindest angenähert kreisförmig umlaufenden Förderweg um eine entsprechende Achse 3' bzw. 4' auf, wobei die Achse senkrecht verläuft. Die erste Transporteinrichtung 3 weist an ihrem Umfang eine Vielzahl von Halterungen 5 auf, die im dargestellten Ausführungsbeispiel jeweils eine Greifzange 5a enthalten, die in der Lage ist, einen am Preform 2 angeordneten Halsbund 2a zu untergreifen und den Preform 2 dadurch mit senkrecht verlaufender Mittelachse 2' und nach oben weisender Öffnung zu halten. Die Greifzange 5a ist an einem Schwenkarm 5b angeordnet, der sich um die Achse 3' der ersten Transporteinrichtung 3 dreht und (kurven-)gesteuert Ausgleichsbewegungen durchführen kann. Der Schwenkarm ist Teil eines Teilungsverzugssterns. Seine Bewegung wird über zwei Kurven gesteuert, um die Preforms, die aus dem Ofen kommen, auf die Teilung der Blasform zu bringen. Dazu müssen die Preforms gezielt beschleunigt werden, weshalb eine spezielle Kurvenbahn notwendig ist. Somit ist der Schwenkarm meistens aus der Radialen ausgelenkt, bei der größten Annäherung der beiden Transporteinrichtungen befindet er sich jedoch exakt in der Radialen.

In den Fig. 2 bis 4 ist nur eine der Kurven, und davon ein Kurbenbereich 30 gezeigt, der dafür sorgt, dass die Halterungen 5, 6 mit den Preforms 2 im Übergabebereich Ü parallel zueinander verlaufen. Eine weitere, nicht gezeigte Kurve ist vorgesehen, die dafür sorgt, dass der Schwenkarm 5b in geeigneter Weise aus der radialen Ausrichtung zur Achse 3' ausgelenkt wird, um die Umfangsgeschwindigkeit beider Transporteinrichtungen 3, 4 sowie einen eventuellen Teilungsversatz zwischen den Halterungen 5 und den Halterungen 6 auszugleichen.

Bevorzugt ist die Halterung 5 der ersten Transporteinrichtung 3 in der Lage, bei Einwirkung entsprechender Kräfte geringfügig auszuweichen, beispielsweise in Radialrichtung bzw. in Umfangsrichtung bezüglich der Drehachse 3', um Beschädigungen des Preforms zu vermeiden.

Auch die zweite Transporteinrichtung 4 weist eine Halterung 6 für den Preform 2 auf, wobei die Halterung 6 hier durch einen Mündungsbereich einer Blasform 7 gebildet wird. Die Blasform 7 ist, in Fig. 1 nicht sichtbar, in üblicher Weise teilbar, so dass der Preform 2 eingesetzt und der fertige Behälter entnommen werden kann. Im Bereich der Halterung 6 legt sich die Blasform 7 eng an den Preform an, so dass die Position des Preforms 2 in der Halterung 6 festgelegt ist.

Wie Fig. 1 zeigt, überlappen sich im Übergabebereich Ü die Transportwege der Halterungen 5 und 6, so dass der Preform in üblicher Weise in die Blasform eingesetzt werden kann. Dabei erfolgt das Einsetzen jedoch derart, dass der Preform noch durch die erste Halterung 5 gehalten werden kann, während er sich bereits in der zweiten Halterung 6 befindet.

Aus den Fig. 2 bis 4 sind die Bewegungsverhältnisse im Übergabebereich Ü dargestellt. In Fig. 2 bewegt sich sowohl die Halterung 5, die den Preform 2 heranführt, als auch die Blasform 7 mit der Halterung 6 in den Übergabebereich Ü hinein. Die erste und die zweite Transporteinrichtung 3, 4 bewegen sich gegenläufig aber bevorzugt mit gleicher Geschwindigkeit, so dass sie sich im Übergabebereich Ü, bedingt durch die Kurvensteuerung über den Kurvenbereich 30, einander in ihrer Bewegung begleiten. Betrachtet man die verschiedenen Stellungen der Halterung 5 mit ihrem Schwenkarm 5b am Schnittpunkt mit der Preform 2 bezüglich der Radialausrichtung der Blasform 7 zur Drehachse 4' der zweiten Transporteinrichtung 4, so zeigt sich, dass sich die Halterungen 5 und 6 relativ zueinander bewegen, und zwar über einen Drehwinkelbereich, um den dann natürlich auch der in der ersten Halterung 5 sitzende Preform um seine Längsachse 2' gedreht wird. Diese Relativverdrehung wird noch unterstützt und vergrößert, wenn die Halterung 5 einen Schwenkarm 5b enthält, der sich durch die Rotation der ersten Transporteinrichtung 3 relativ zur Blasform 7 bewegen kann. Durch zweckmäßige Ausgestaltung kann erreicht werden, dass sich die beiden Halterungen 5, 6 über einen relativ großen Winkelbereich α begleitend bewegen, der beispielsweise etwa 25° bis 40° oder 15 cm bis 45 cm beträgt. Mit diesem Winkelbereich ist es in der nachfolgend beschriebenen Weise möglich, eine Verdrehung des Preforms 2 um einen Winkelbereich von **±** 10° zu erreichen, was selbst bei nur grob vorausgerichteten Preforms völlig ausreicht, eine exakte Drehwinkelposition des Preforms 2 in der Blasform 7 zu erreichen.

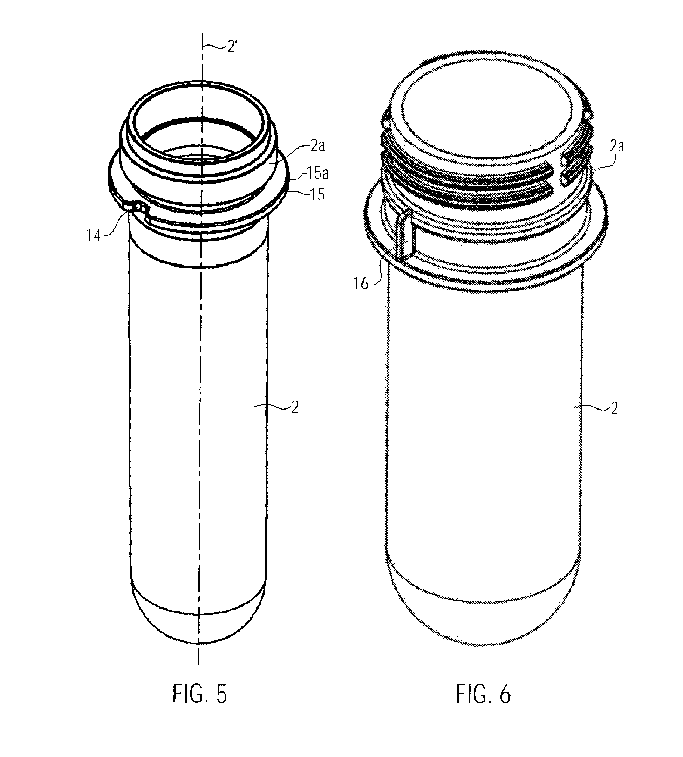

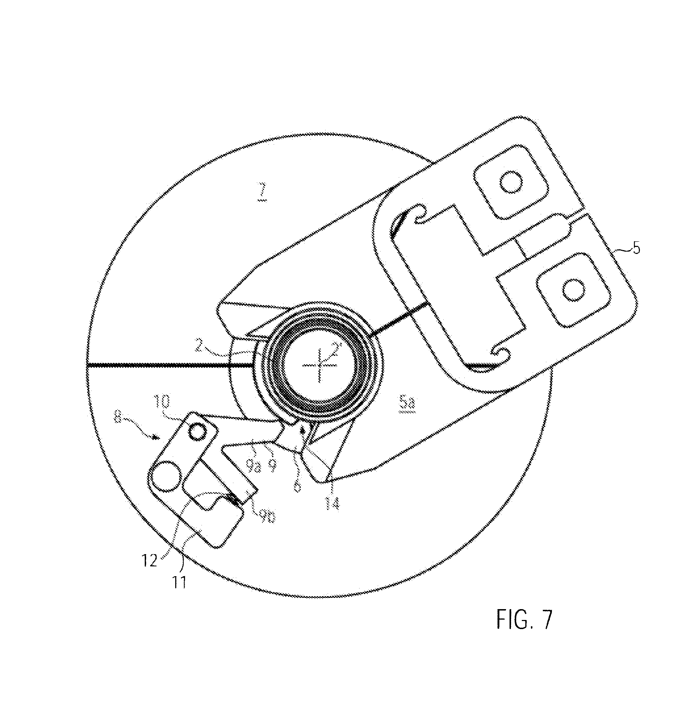

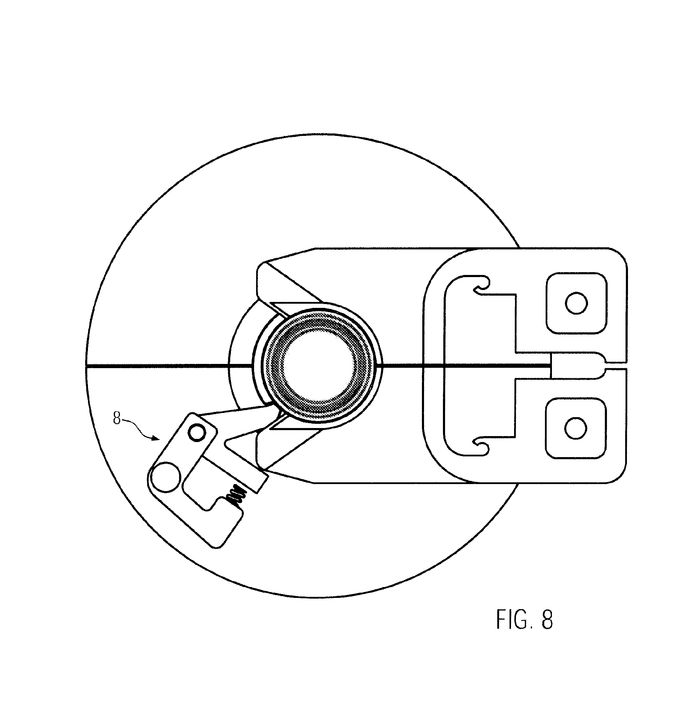

Zu diesem Zweck ist eine Ausrichteinrichtung 8 vorgesehen, die in den Fig. 1, 7 und 8 näher dargestellt ist. Die Ausrichtvorrichtung 8 enthält ein Positionierelement 9, das im dargestellten Ausführungsbeispiel als Kipphebel oder Sperrklinke ausgebildet ist. Das Positionierelement 9 enthält einen ersten Arm 9a und einen winklig dazu verlaufenden zweiten Arm 9b. Das Positionierelement 9 ist um eine Schwenkachse 10 verschwenkbar. Die Schwenkachse 10 ist zwischen den beiden Armen 9a, 9b angeordnet. Die Schwenkachse 10 verläuft im Wesentlichen parallel zur Längsmittellinie 2' des Preforms 2. Das Positionierelement 9 ist über die Schwenkachse 10 an einem Träger 11 befestigt, der auf der Oberseite der Blasform 7 angeordnet ist. Zwischen dem Träger 11 und dem Positionierelement 9 ist eine Feder 12 angeordnet, die einen der Arme 9b des Positionierelementes 9 beaufschlagt. Der andere Arm 9a des Positionierelementes 9 enthält in dem in den Fig. 7 und 8 dargestellten Ausführungsbeispiel einen Eingriffsvorsprung 13, der so bemessen und ausgestaltet ist, dass er in wenigstens eine als Ausnehmung ausgebildete Ausrichtmarkierung 14 am Preform 2 (siehe auch Fig. 5) derart eingreifen kann, dass das Positionierelement 9 den Preform 2 hält und gegen die Haltekraft in der ersten Halterung 5 verdrehen kann. Der Vorsprung 13 ist weiterhin so bemessen und geformt, dass er beim Eingriff in die Ausrichtvertiefung 14 jede weitere Drehung des Preforms relativ zur zweiten Halterung 6 und in beide Richtungen um die Längsmittellinie 2' unterbindet, den Preform 2 somit in einer vorbestimmten Stellung zur Blasform 7 arretiert. Diese Arretierungsstellung ist in Fig. 8 dargestellt.

Die Vertiefung 14 ist, wie Fig. 5 zeigt, in einem radial nach außen vorstehenden Bund 15 des Preforms 2 vorgesehen, der mit Abstand unterhalb des Halsbundes 2a angeordnet ist und auf dem eine zylindrische Lauffläche 15a vorgesehen ist. Auf dieser Lauffläche 15a liegt der Vorsprung 13 des Positionierelementes 9 an, wenn sich der Vorsprung 13 nicht in der Ausnehmung 14 befindet. In dieser Stellung wird die Feder 12 komprimiert, so dass das Positionierelement 9 mit einer Vorspannung gegen die Umlaufbahn 15a gedrückt wird. Dadurch wird eine Bereitschaftsstellung (Fig. 7) des Positionierelementes 9 definiert, aus der sich das Positionierelement unter Belastung durch die Feder 12 sofort und ohne Verzögerung in die Arretierstellung (Fig. 8) bewegen kann, sobald sich die Halterungen 5 und 6 relativ zueinander in eine Stellung bewegt haben, in der dies möglich ist.

Befindet sich der Vorsprung 13 einmal in der Vertiefung 14, so wird der Preform 2 gegen jede weitere Drehung relativ zur zweiten Halterung 6 und somit zur Blasform 7 gesperrt. Der Griff der ersten Halterung 5 am Preform 2 ist nicht so fest, dass der Preform 2 beschädigt wird, wenn er noch in der ersten Halterung 5 sitzt. Vielmehr erlaubt die erste Halterung 5 ein Durchdrehen des Preforms 2. Es ist jedoch auch möglich, Vorkehrungen zu treffen, die die Halterung 5 öffnen, sobald sich das Positionierelement 9 in seiner Arretierstellung befindet, d.h. der Vorsprung 13 in der Vertiefung 14 sitzt.

Wie Fig. 1 zeigt, liegt die Halterung 5 oberhalb des Positionierelementes 9, d.h. das Positionierelement 9 ist zwischen der Halterung 5 und der Halterung 6 der Transporteinrichtung 4 angeordnet. Vorzugsweise weist die Halterung 6 der Transporteinrichtung 4 eine Aussparung für das Positionierelement 9, insbesondere für einen der Arme 9a des Positionierelementes 9 auf. Auf diese Weise kann sich die Halterung 5 zurückziehen, wenn sie den Übergabebereich Ü verlässt, während das Positionierelement 9 in seiner Arretierungsstellung verbleibt.

Als Ausrichtmarkierung für die Zwecke der vorliegenden Erfindung kann auch ein Vorsprung 16 eingesetzt werden, wie er in Fig. 6 zu sehen ist. Der Vorsprung 16 kann vorzugsweise als Anschlag dienen. In einer weiteren Ausführungsform kann der Arm 9a des Positionierelementes 9 derart ausgebildet sein, dass er eine Vertiefung in dem Vorsprung 13 aufweist, um formschlüssig mit dem Vorsprung 16 zusammenzuwirken. Sowohl die Vertiefung als auch der Vorsprung können noch weitere Funktionen beinhalten, also beispielsweise als Gewindestopp dienen, wenn ein Verschluss in einer bestimmten Stellung auf einem Behälter sitzen soll.

Eine Ausrichtung kann auch dann notwendig sein, wenn der Farbverlauf bezüglich der Rotationsachse von mehrfarbigen Preforms wie beispielsweise in der DE 20 2008 016 006 beschrieben, winkelgerecht zur Behandlung stehen muss.

Die Ausrichtung von mehrfarbigen Preforms kann mit den obenbeschriebenen Vertiefungen oder Vorsprüngen vorgenommen werden, es ist jedoch auch möglich, anstelle der mechanisch wirkenden Ausrichteinrichtung die Farbe selbst als Ausrichtmarkierung zu verwenden und eine Einrichtung zur Farberkennung einzusetzen, die beispielsweise die Halterung 5 öffnet, sobald sich der Preform bezüglich der Blasform in der vorbestimmten Farbausrichtung befindet.

In einer bevorzugten Ausführung, die auch unabhängig von der obenbeschriebenen Konstruktion der Vorrichtung zum Handhaben eines Behälterproduktes eingesetzt werden kann, werden in Umfangsrichtung unterschiedlich farbige Preforms zuerst in einer Mikrowellenheizeinrichtung erwärmt und anschließend in eine Blasform zur Expansion mittels Druckluft transportiert. Dabei können alle unterschiedlich farbigen Bereiche gleichmäßig in der Mikrowelle erwärmt werden, was mit herkömmlichen Infrarotöfen nicht ohne weiteres möglich ist, da beispielsweise schwarze Bereiche ein anderes Absorptionsverhalten aufweisen als transparente Bereiche. Zwischen der Mikrowellenheizeinrichtung und der Vorrichtung zum Blasformen (oder in einer dieser Vorrichtungen) kann dieser Preform derart radial ausgerichtet werden, so dass entsprechende Bereiche mit bestimmter Farbe an die dafür vorgesehenen Flächen der Blasform expandiert werden. Die Vorrichtung zum Blasformen kann dabei mehrere auf einem umlaufenden Rad angeordnete Blasformen umfassen.

In Abwandlung des beschriebenen und gezeichneten Ausführungsbeispiels kann die erfindungsgemäße Ausrichtvorrichtung auch zwischen anderen Transporteinrichtungen vorgesehen sein, bei denen es darauf ankommt, eine bestimmte Drehwinkelausrichtung des Preforms zu erreichen und beizubehalten. Das Positionierelement kann die unterschiedlichsten Konstruktionen aufweisen, also beispielsweise auch als radial belastete und sich linear bewegende Sperrklinke ausgebildet sein. Auch ist die Erfindung bei anderen üblichen Halterungen für Preforms einzusetzen. Weiterhin müssen die Transporteinrichtungen nicht unbedingt kreisförmige Bewegungsbahnen aufweisen, sofern dafür gesorgt wird, dass sich die Drehwinkelausrichtung des Preforms beim Durchlaufen eines Übergabebereiches zwischen den beiden Transporteinrichtungen verändert.

## Patentansprüche

1. Vorrichtung zum Handhaben eines Behälterproduktes, insbesondere eines Behälters oder eines Preforms (2) zur Herstellung eines Behälters, wobei das Produkt (2) mit einer Ausrichtmarkierung (14, 16) versehen und in eine vorbestimmte Drehwinkelposition bezüglich einer Halterung (6) verdrehbar ist, **dadurch gekennzeichnet, dass** eine Ausrichteinrichtung (8) an einer Übergabestelle (Ü) zwischen einer Halterung (5) einer ersten Transporteinrichtung (3) und einer Halterung (6) einer zweiten Transporteinrichtung (4) angeordnet ist, in der sich die Halterungen (5, 6) einander begleitend relativ zueinander bewegen, und dass die Verdrehbewegung des Produktes (2) in die vorbestimmte Drehwinkelposition aus der Relativbewegung der Halterungen (5, 6) abgeleitet ist.

2. Vorrichtung nach Anspruch 1, **dadurch gekennzeichnet, dass** die Ausrichteinrichtung (8) der Halterung (6) der zweiten Transporteinrichtung (4) zugeordnet ist.

3. Vorrichtung nach Anspruch 1 oder 2, **dadurch gekennzeichnet, dass** die Ausrichteinrichtung (8) ein in eine Arretierstellung bewegbares Positionierelement (9) aufweist.

4. Vorrichtung nach Anspruch 3, **dadurch gekennzeichnet, dass** das Positionierelement (9) durch eine Feder (12) belastet ist.

5. Vorrichtung nach Anspruch 3 oder 4, **dadurch gekennzeichnet, dass** das Positionierelement (9) in einer Bereitschaftsstellung über einen Winkelbereich (α) vor der Ausrichtmarkierung (14, 16) mit dem Produkt (2) in Eingriff steht.

6. Vorrichtung nach einem der Ansprüche 3 bis 5, **dadurch gekennzeichnet, dass** das Positionierelement (9) einen Kipphebel enthält.

7. Vorrichtung nach einem der Ansprüche 3 bis 6, **dadurch gekennzeichnet, dass** das Positionierelement (9) einen Eingriffsvorsprung (13) und die Ausrichtmarkierung (14) eine Eingriffsvertiefung aufweist.

8. Vorrichtung nach einem der Ansprüche 1 bis 7, **dadurch gekennzeichnet, dass** wenigstens eine der Transporteinrichtungen (3, 4) eine kreisförmige Förderbahn aufweist.

9. Vorrichtung nach einem der Ansprüche 1 bis 7, **dadurch gekennzeichnet, dass** beide Transporteinrichtungen (3, 4) eine im Wesentlichen kreisförmige Förderbahn aufweisen.

10. Vorrichtung nach einem der Ansprüche 1 bis 9, **dadurch gekennzeichnet, dass** sich die Halterungen (5, 6) der ersten und der zweiten Transporteinrichtung (3, 4) im Übergabebereich (Ü) überlappen.

11. Vorrichtung nach einem der Ansprüche 1 bis 10, **dadurch gekennzeichnet, dass** die Halterung (5) der ersten Transporteinrichtung (3) im Übergabebereich (Ü) eine ein kontrolliertes Verdrehen des Produktes (2) gestattende Haltekraft auf das Produkt (2) ausübt.

12. Vorrichtung nach einem der Ansprüche 1 bis 11, **dadurch gekennzeichnet, dass** die zweite Transporteinrichtung (4) eine Blasformstation zur Herstellung von Behältern und die erste Transporteinrichtung (3) ein Transferstern zum Beliefern der Blasformstation mit Preforms ist.

13. Verfahren zum Handhaben eines Behälterproduktes, insbesondere eines Behälters oder eines Preforms (2) zur Herstellung eines Behälters, wobei das Produkt (2) durch Verdrehen um seine Längsachse (2') in eine bezüglich einer Halterung (6) vorbestimmte Ausrichtposition gebracht wird, **dadurch gekennzeichnet, dass** das Produkt (2) in einem Übergabebereich (Ü) von einer Halterung (5) einer ersten Transporteinrichtung (3) auf eine Halterung (6) einer zweiten Transporteinrichtung (4) verdreht wird, und die Verdrehung aus einer Relativbewegung der Halterungen (5, 6) abgeleitet wird.

14. Verfahren nach Anspruch 13, **dadurch gekennzeichnet, dass** das Produkt (2) durch die Ausrichteinrichtung (8) in der vorbestimmten Drehwinkelposition arretiert wird.
